# EUROPEAN PATENT SPECIFICATION

(11) **EP 4 563 534 B1**
(45) Date of publication and mention of the grant of the patent: **27.05.2026**
(21) Application number: 23212887.6
(22) Date of filing: 29.11.2023
(51) Int. Cl.: C01G 53/00, C25B 1/04, C01G 53/40, C25B 9/23, C25B 11/031

(54) **NON PGM POROUS CATALYSTS SYNTHESIS AND INK PREPARATION METHODS FOR AEMWE COMPRISING THEM**
SYNTHESE NICHT PGM PORÖSER KATALYSATOREN UND TINTENHERSTELLUNGSVERFAHREN DAFÜR
SYNTHÈSE DE CATALYSEURS POREUX NON PGM ET PROCÉDÉS DE PRÉPARATION D'ENCRE POUR L'AEMWE LES COMPRENANT

(43) Date of publication of application: 04.06.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: Napporn, Teko, 86073 Poitiers (FR); Coutanceau, Christophe, 86073 Poitiers (FR); Rafaideen, Thibault, 86073 Poitiers (FR); Parment, Mickael, 78354 Loges en Josas (FR); Souillard, Guillaume, 78354 Loges en Josas (FR); Richet, Nicolas, 78354 Loges en Josas (FR)
(74) Representative: Air Liquide

(56) References cited:
- WO-A1-2023/170421
- STELMACHOWSKI PAWEL ET AL: "Oxygen evolution catalysis in alkaline conditions over hard templated nickel-cobalt based spinel oxides", INTERNATIONAL JOURNAL OF HYDROGEN ENERGY, vol. 42, no. 46, 27 June 2017 (2017-06-27), pages 27910 - 27918, XP085255269, ISSN: 0360-3199, DOI: 10.1016/J.IJHYDENE.2017.06.034
- I. ABIDAT: "Three dimensionally ordered mesoporous hydroxylated Ni x Co 3-x O 4 spinels for the oxygen evolution reaction: on the hydroxyl-induced surface restructuring effect", vol. 5, no. 15, 17 March 2017 (2017-03-17), GB, pages 7173 - 7183, XP093166119, ISSN: 2050-7488, Retrieved from the Internet <URL:https://pubs.rsc.org/en/content/articlepdf/2017/ta/c7ta00185a> [retrieved on 20240524], DOI: 10.1039/C7TA00185A
- MOIS�S CABO: "Mesoporous NiCo 2 O 4 Spinel: Influence of Calcination Temperature over Phase Purity and Thermal Stability", CRYSTAL GROWTH & DESIGN, vol. 9, no. 11, 4 November 2009 (2009-11-04), US, pages 4814 - 4821, XP093165569, ISSN: 1528-7483, DOI: 10.1021/cg900648q

## Description

### Technical field of the invention

The present invention relates to the domain of industrial scale water electrolysers, in particular in the field of anion exchange membrane water electrolysis (AEMWE). More particularly, it relates to the synthesis of catalysts which do not involve metals belonging to the group of Platinum (non PGM metals) but which exhibit similar or better performances relating to, but not limited to, their catalyst activity and/or lifetime.

### Technical background of the invention

The performances of a catalyst depend on several parameters, such as the chemical formulation, the microstructure and the distribution of the catalyst within the electrochemical reactor. The interaction of the catalyst with the ionomer which is used to supply the ions required for the electrochemical reaction, is also critical in the context of water electrolysis.

Platinum group metals (PGM) such as Ruthenium (Ru) and Iridium (Ir) and their oxides, are considered as state-of-the-art catalysts for the Oxygen Evolution Reaction (OER) which occurs at the anode of electrolysis cells (acidic or alkaline)⁽¹⁾. However, large-scale use of these metals, or their oxides, pose several major issues due to their low availability on earth, strategic character and high price.

Non PGM transition metal-based catalysts demonstrated high performance and also satisfactory stability, either chemical or physical, in alkaline media⁽²⁾. From the comparison of the electrochemical behaviour of 3,500 non-PGM ternary catalysts, Cobalt (Co) and Nickel (Ni) were determined to be essential elements of the catalysts for the OER in alkaline media, while others metals such as Iron (Fe), Gallium (Ga) or Chromium (Cr) were shown to increase the catalytic activity⁽³⁾.

Numerous synthetic methods have been developed to produce NiCo catalysts for the OER⁽⁴⁾. Spinel-type materials such as cobaltites, have exhibited very interesting performances for the OER on account of their high catalytic ability and thermodynamic stability in alkaline medium⁽⁵⁾. It has been shown, that 2D ordered mesoporous structures possess a high surface area and enable an easier dispersion and formation of a steady layer on the working electrode compared to nanoparticles⁽⁶⁾.

Such structures can be obtained using the nanocasting method, which enables the preparation of 2D mesoporous oxides of different compositions which exhibits large surface areas and highly connected mesoporous frameworks with a uniform pore size distribution⁽⁷⁾. This method, which relies on the use of a hard template to structure the 2D oxide materials, has been used in numerous applications⁽⁸⁾. Mesoporous silica templates, such as SBA 15 ^{™} (hexagonal structure), have been used for the replication of mesoporous NiₓCo_{y} spinel structures^{5,7}.

To include non-PGM electrocatalysts in the anode layer of an anion exchange membrane water electrolysis cell (AEMWEC), anion exchange ionomers (AEI) must be added to bind the catalyst and conduct hydroxide ions towards the active sites. Membrane electrode assemblies containing commercial or home-made non-PGM anode catalytic particles (NiCoFeOₓ, Ce_{0.2}MnFe_{1.8}O₄, NiMn₂O₄, CuCoOₓ) have been prepared using FAA^{™} anion exchange membranes and FAA3^{™} as the ionomer in electrodes (both from Fumatech, Germany)^{(9,10,11)} or using a Tokuyama AEM A201^{™} and I₂ as the AEI^{™} ionomer (Acta Spa, Italy) in electrodes ⁽¹²⁾.

Sustainion^{™} (Dioxide materials, USA) and Aemion^{™} (Ionomer Innovations, Inc., Vancouver, BC, Canada) AEM have also been used in AMEWE cells combined with non-PGM anode catalysts, but generally with Nafion^{™} acting only as a binder⁽¹³⁾.

Baranova and et al. studied the effects of the Aemion^{™} ionomer in an anode catalytic layer (Ni₉₀Fe₁₀ nanoparticles) in both three electrode and electrolysis (Aemion AF1-HNN8-50-X membrane, 1 M KOH, 50 °C) cell configurations; the results were compared to the commercial Fumion^{™} and Nafion^{™} ionomers, revealing a strong interaction between Aemion^{™} ionomer and the NiFe catalyst which limits the Ni(OH)₂/NiOOH transition and decreases the OER activity. This study highlights the importance of the catalytic ink (catalysts + ionomer + solvents) formulation and of the deposition method, either on a backing (catalyst coated backing - CCB) or on the membrane (catalyst coated membrane - CCM), towards the performance of the AEMWEC⁽¹⁴⁾.

The scientifc articles "Three dimensionally ordered mesoporous hydroxylated NixCo3-xO4 spinels for the oxygen evolution reaction: on the hydroxyl-induced surface restructuring effect" by I. Abidat et al,, JOURNAL OF MATERIALS CHEMISTRY A, vol. 5, no. 15, 17 March 2017, pages 7173-7183 and "Mesoporous NiCo2O4 Spinel: Influence of Calcination Temperature over Phase Purity and Thermal Stability" by Moisés Cabo et al., CRYSTAL GROWTH & DESIGN, vol. 9, no. 11, 4 November 2009, pages 4814-4821 are both directed the preparation of a mesoporous NiCo₂O₄ spinel by a silica template method.

A solution which is able to provide a new cheaper and highly active non-PGM OER catalyst, would be beneficial to produce oxygen and hydrogen, through the electrolysis of water using an anion exchange membrane water electrolysis cell, without harming the environment.

### Description of the invention

A material having a 2D-ordered mesoporous physical structure, in the context of the present invention, is a material which consists of atomically thin sheets exhibiting covalent in-plane bonding and weak interlayer and layer-substrate bonding. Such a definition was published in 2017 by Andrew J. Mannix et al ⁽¹⁵⁾. Reference is also made to Yan Ai et al⁽¹⁶⁾.

The present invention relates to a synthesis method of a material belonging to the spinel nickel cobaltite family, represented by the formula Ni Co₍₂₋ₓ₎ FeₓO₄ in which x is greater or equal to 0 and less than 1, and having a 2D-ordered mesoporous physical structure which does not comprise any mesoporous template, comprising the following steps:
- A step a) of mixing a 2D-ordered mesoporous template, a Ni(II) inorganic salt, a Co(II) inorganic salt, optionally a Fe(III) inorganic salt and an alcohol, to form a first alcoholic suspension of said 2D-ordered mesoporous template and said inorganic salts and;
- A step b) during which said first alcoholic suspension of said 2D-ordered mesoporous template and of said inorganic salts, obtained at step a), is first homogenised and subsequently dried, to form a powder of a mixture of said 2D-ordered mesoporous template and said inorganic salts;
- A step c) of heating under air, the powder obtained at step b) to form a powder of a mixture of said 2D-ordered mesoporous template, the Ni(II) oxide, the Co(II) oxide and optionally the Fe(III) oxide;
- A step d) of mixing a 2D-ordered mesoporous template, a Ni(II) inorganic salt, a Co(II) inorganic salt, optionally a Fe(III) inorganic salt and an alcohol, to form a second alcoholic suspension of said 2D-ordered mesoporous template and said inorganic salts;
- A step e) during which said second alcoholic suspension of said 2D-ordered mesoporous template and said inorganic salts, obtained at step d), is mixed with said powder of a mixture of said 2D-ordered mesoporous template, the Ni(II) oxide, the Co(II) oxide and optionally the Fe(III) oxide, obtained at step c), to form a third suspension;
- A step f) of first homogenising, and subsequently drying, the third suspension, obtained at step e), to form a powder;
- A step g) of heating under air, the powder obtained at step f) to obtain a material belonging to the spinel nickel cobaltite family represented by the formula Ni Co₍₂₋ₓ₎ FeₓO₄ in which x is greater or equal to 0 and less than 1 and having a 2D-ordered mesoporous physical structure;
- A step h) of mixing heated aqueous alkaline solution and the material obtained at step g), to form an aqueous alkaline suspension of said material; and
- A step i) of filtrating the aqueous alkaline suspension obtained at step h), to separate a retentate, which is further rinsed with water and dried to form, by removing the 2D-ordered mesoporous template still present, said expected material belonging to the spinel nickel cobaltite family represented by the formula Ni Co₍₂₋ₓ₎ FeₓO₄ in which x is greater or equal to 0 and less than 1 and having a 2D-ordered mesoporous physical structure, which does not comprise any mesoporous template.

The Ni(II) Co(II) and Fe(III) inorganic salts, in the context of the invention, are for example nitrate, sulfite, sulfate or phosphate salts.

According to a particular embodiment, the invention relates to the synthesis method, as defined above, characterized in that x is equal to 0 in the formula Ni Co₍₂₋ₓ₎ FeₓO₄.

According to another particular embodiment, the invention relates to the synthesis method as defined above, in which said Ni(II) inorganic salt, Co(II) inorganic salt and optional Fe(III) inorganic salt, implemented at steps a) and d), are all nitrate salts.

The mesoporous template, in the context of the invention, is a chemical compound which is used in the synthesis method of the material, as defined above, to generate the formation of its physical mesoporous structure. More particularly, said mesoporous template, is a 2D-ordered mesoporous silica template. An example of such a template is SBA-15^{™}.

According to another particular embodiment, the invention relates to the synthesis method, as defined above, in which the 2D-ordered mesoporous template, implemented at steps a) and d), is a 2D-ordered mesoporous silica template.

The alcohol implemented at steps a) and d), in the context of the invention, are namely a C₁ to C₄ alkanol, such as ethanol, propanol, isopropanol, butanol, isobutanol, sec-butanol or tert-butanol.

According to another particular embodiment, the invention relates to the synthesis method, as defined above, in which said alcohol, implemented at steps a) and d), is ethanol.

The alcoholic suspensions made at steps a) and e), in the context of the invention, are homogenized by known methods.

According to another particular embodiment, the invention relates to the synthesis method, as defined above, in which the alcoholic suspensions made at steps a) and e) are sonicated in an ultrasonic bath at steps b) and f).

According to another particular embodiment, the invention relates to the synthesis method, as defined above, in which said step c) comprises:
- a sub-step c₁)step b
- a sub-step c₂)step c₁), is maintained under air at said working temperature for approximately 5 hours to 10 hours.

According to a more particular embodiment, step c) of the synthesis method, as defined above, is achieved by heating under air the powder obtained at step b) such that the temperature gradually increases, at a rate of 2°C per minute, until a working temperature of approximately 250°C is reached, and by subsequently maintaining said heated powder for approximately 6 hours at this working temperature.

According to a particular embodiment, said step g) of the synthesis method, as defined above, comprises:
- a sub-step g₁)step f
- a sub-step g₂)step g₁) is maintained under air at said working temperature for approximately 5 hours to 10 hours.

According to a more particular embodiment, step g) of the synthesis method, as defined above, is achieved by heating under air the powder obtained at step f) such that the temperature gradually increases, at a rate of 2°C per minute, until a working temperature of approximately 450°C is reached, and by subsequently maintaining said heated powder for approximately 6 hours at this working temperature.

According to another embodiment, the present invention relates to a preparation method of the formulation, as defined above, comprising the following steps:
- A step j) of mixing a liquid medium with an anion exchange ionomer to obtain a ionomer suspension,
- A step k) of dispersing the material obtained at step j), in an aqueous solution of an aliphatic alcohol,
- A step l) of homogenising the alcoholic dispersion obtained at step k),
- A step m) of mixing the homogenised alcoholic dispersion obtained at step l), with said ionomer suspension obtained at step j), and
- A step n) of homogenising the mixture obtained at step m), to obtain the expected formulation.

More particularly, in the preparation method of the formulation, as defined above, said liquid medium, implemented at step j), is a mixture of ethanol and water or a mixture of acetone and ethanol, said anion exchange ionomer implemented at step j) is AP3-HNN6-00-X^{™} and said aliphatic alcohol implemented at step k) is ethanol.

An embodiment not according to the invention relates to the use of the material belonging to the spinel nickel cobaltite family, represented by the formula Ni Co₍₂₋ₓ₎ FeₓO₄ in which x is greater or equal to 0 and less than 1, and having a 2D-ordered mesoporous physical structure which does not comprise any mesoporous templates, as defined above, as a non-PGM electrocatalyst on the anode layer of an anion exchange membrane water electrolysis cell.

Another embodiment not according to the invention relates to an electrode assembly for electrolysis, in particular an anion exchange membrane electrolysis, comprising as an electrocatalyst, the material belonging to the spinel nickel cobaltite family, represented by the formula Ni Co₍₂₋ₓ₎ FeₓO₄ in which x is greater or equal to 0 and less than 1, and having a 2D-ordered mesoporous physical structure which does not comprise any mesoporous template, as defined above.

A further embodiment not according to the invention relates to an anion exchange membrane water electrolysis cell, which comprises on its anode layer, as the sole electrocatalyst, the material belonging to the spinel nickel cobaltite family, represented by the formula Ni Co₍₂₋ₓ₎ FeₓO₄, in which x is greater or equal to 0 and less than 1, and having a 2D-ordered mesoporous physical structure which does not comprise any mesoporous template, as defined above.

Finally, an embodiment not according to the invention relates to the use of the formulation, as defined above, to coat the material belonging to the spinel nickel cobaltite family, represented by the formula Ni Co₍₂₋ₓ₎ FeₓO₄ in which x is greater or equal to 0 and less than 1, of which the physical structure is a 2D-ordered mesoporous structure, and which does not comprise any mesoporous template, on the anode layer of an anion exchange membrane water electrolysis cell.

### Experimental data

### Preparation of a catalyst according to the invention

Ni(NO₃)₂·6H₂O and Co(NO₃)_{2.6}H₂O (Ni:Co atomic ratio of 1:2) are suspended in 5 cm³ ethanol. 0.5 g of the SBA-15 template is subsequently added. The mixture is sonicated in an ultrasonic bath for one hour, and is then dried in an oven overnight at 50°C. The obtained powder is calcined at 250°C for six hours under air, following a temperature ramp up from room temperature to 250°C at 2°C/min.

A second solution of the Ni and Co salts is prepared as above and the calcined powder previously obtained is added. The mixture is sonicated in an ultrasonic bath during one hour, and is then dried in an oven overnight at 50°C. The obtained powder is calcined at 450°C for six hours under air, following a temperature ramp up from room temperature to 450°C at 2°C/min.

A NaOH 2M aqueous solution is prepared and heated to 80°C. The obtained calcined powder is subsequently added to the solution. The mixture is allowed to rest for one hour and subsequently filtered. The retentate is thoroughly rinsed with ultrapure water, and dried at 80°C overnight in an oven to obtain the expected compound of the formula NiCo₂ having a 2D-ordered mesoporous structure.

### Preparation of a catalytic ink formulation

### Preparation of the Aemion suspension

Method 1: The Aemion solution is prepared by weighing 0.35 g of the ionomer AP3-HNN6-00-X^{™} (Ionomer Innovations, Inc., Vancouver, BC, Canada) in a 30 cm³ flask. Ethanol (5.98 g) is first added to the ionomer, followed by water (0.66 g). The mixture is kept under magnetic stirring at 45°C, before using it.

Method 2: The Aemion solution is prepared by weighing 1 g of AP3-HNN6-00-X^{™} (Ionomer Innovations, Inc., Vancouver, BC, Canada) in a 30cm³ flask. Acetone (10.5 g) is added first, followed by ethanol (4.5 g) dropwise. The mixture is kept under magnetic stirring at room temperature before using it.

### Preparation of the catalytic ink

The catalytic ink is prepared by dispersing 150 mg of the catalytic powder in a solution of 1 cm³ water and 1.5 cm³ ethanol. The mixture is sonicated in an ultrasonic bath for thirty minutes. 215 mg of an Aemion solution (5 wt%) are subsequently added, and the mixture is again sonicated in an ultrasonic bath for three minutes.

### Performance and activity

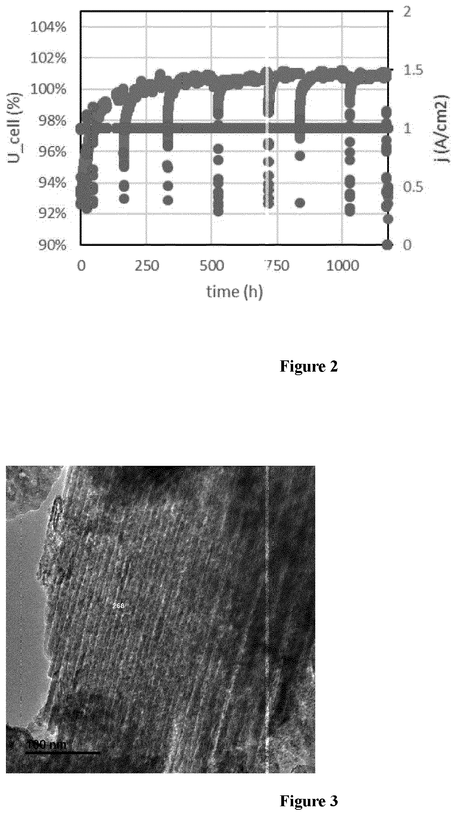

The performances and stability of the catalyst are evaluated using a 25 cm² active area single cell and several anion exchange membranes. The test consists of operating the cell at a constant current density for a minimum of one thousand hours. A 1M KOH aqueous solution is used as electrolyte, flowing on both the anode and cathode sides of the cell at a constant temperature of 60°C. Figure 2 shows the evolution of the cell voltage over time (over 1,000 hours) resulting from the degradation of cell components, but also due to reversible losses mostly associated to bubble trapping inside the cell. Degradation of components are monitored by a *"post mortem"* analysis and analysis of the KOH flowing through the cell.

Samples of KOH are taken periodically to identify if chemical elements are released during the operation (catalyst, corrosion products,). No traces of catalyst loss or dissolution were detected during the entire test.

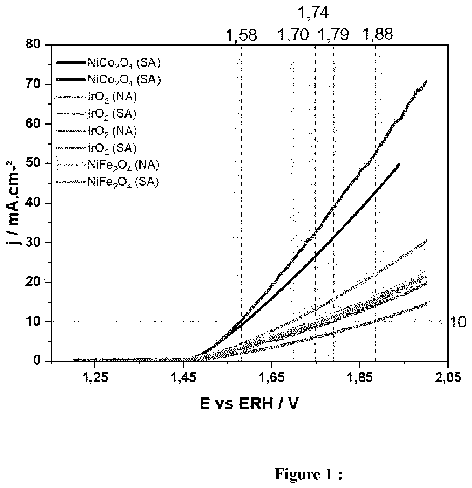

The excellent and stable performances of the cell, over more than thousand hours, indicate that the non-PGM catalyst exhibits similar, or even slightly better, performances compared to the same cell using PGM catalysts, such IrO₂, at the anode. The graphic in Figure 1 illustrates the catalytic activity of different catalyst formulations measured using a rotating disk electrode.

Figure 3 is an electron microscope image of the 2D-tubular structure of the catalyst synthesized using the SBA15 template.

### Cited references

(1) S. Cherevko et al. / Catalysis Today (2016), 262, 170-180.
(2) L. Trotochaud et al. / J. Am. Chem. Soc. (2012), 134(41), 17253-17261.
(3) J.B. Gerken et al. / Energy Environ. Sci. (2014), 7(7), 2376-2382.
(4) C.X. Zhao et al. / Chem. Soc. Rev. (2021), 50, 7745-7778.
(5) I. Abidat et al. / J. Mater. Chem. A (2015), 3(33), 17433-17444.
(6) T. Grewe et al. / Chem. Mater. (2013), 25, 4926-4935.
(7) I. Abidat et al. / J. Mater. Chem. A (2017), 5(15), 7173-7183.
(8) D. Gu et al. / Chem. Soc. Rev. (2014), 43, 313-344.
(9) T. Pandiarajan et al. / RSC Adv. (2015), 5, 34100-34108.
(10) D. Xu et al. / ACS Catal. (2019), 9, 7-15.
(11) A. Carbone et al. / Int. J. Hydr. Energy (2020), 45, 9285-9292.
(12) I. Vincent et al./ Int. J. Hydr. Energy (2017), 42, 10752-10761.
(13) D. Henkensmeier et al. / J. Electrochem. En. Conv. Stor. (2021), 18, 024001-1/18.
(14) E. Cossar et al. / ACS Appl. Energy Mater. (2022), 5, 9938-9951.
(15) A.J. Mannix et al. / Nature Reviews Chemistry (2017), 1, 0014.
(16) Y. Ai et al. / Natl. Sci. Rev., 2022, Vol. 9, nwab 108

## Claims

1. A synthesis method of a material belonging to the spinel nickel cobaltite family, represented by the formula Ni Co₍₂₋ₓ₎ FeₓO₄ in which x is greater or equal to 0 and less than 1 and having a 2D-ordered mesoporous physical structure which does not comprise any mesoporous templates in it, comprising the following steps:
- A step a) of mixing a 2D-ordered mesoporous template, a Ni(II) inorganic salt, a Co(II) inorganic salt, optionally a Fe(III) inorganic salt and an alcohol, to form a first alcoholic suspension of said 2D-ordered mesoporous template and said inorganic salts and;
- A step b) during which said first alcoholic suspension of said 2D-ordered mesoporous template and of said inorganic salts, obtained at step a), is first homogenised and subsequently dried, to form a powder of a mixture of said 2D-ordered mesoporous template and said inorganic salts;
- A step c) of heating under air, the powder obtained at step b) to form a powder of a mixture of said 2D-ordered mesoporous template, the Ni(II) oxide, the Co(II) oxide and optionally the Fe(III) oxide;
- A step d) of mixing a 2D-ordered mesoporous template, a Ni(II) inorganic salt, a Co(II) inorganic salt, optionally a Fe(III) inorganic salt and an alcohol, to form a second alcoholic suspension of said 2D-ordered mesoporous template and said inorganic salts;
- A step e) during which said second alcoholic suspension of said 2D-ordered mesoporous template and said inorganic salts, obtained at step d), is mixed with said powder of a mixture of said 2D-ordered mesoporous template, the Ni(II) oxide, the Co(II) oxide and optionally the Fe(III) oxide, obtained at step c), to form a third suspension;
- A step f) of first homogenising, and subsequently drying, the third suspension, obtained at step e), to form a powder;
- A step g) of heating under air, the powder obtained at step f) to obtain a material belonging to the spinel nickel cobaltite family represented by the formula Ni Co₍₂₋ₓ₎ FeₓO₄ in which x is greater or equal to 0 and less than 1 and having a 2D-ordered mesoporous physical structure;
- A step h) of mixing heated aqueous alkaline solution and the material obtained at step g), to form an aqueous alkaline suspension of said material; and
- A step i) of filtrating the aqueous alkaline suspension obtained at step h), to separate a retentate, which is further rinsed with water and dried to form, by removing the 2D-ordered mesoporous template still present, said material belonging to the spinel nickel cobaltite family represented by the formula Ni Co₍₂₋ₓ₎ FeₓO₄ in which x is greater or equal to 0 and less than 1 and having a 2D-ordered mesoporous physical structure, which does not comprise any mesoporous template.

2. A synthesis method according to claim 1 in which x is equal to 0 in the formula Ni Co₍₂₋ₓ₎ FeₓO₄.

3. A synthesis method according to any one of claims 1 or 2, in which said Ni(II) inorganic salt, said Co(II) inorganic salt and said optional Fe(III) inorganic salt implemented at steps a) and d) are all nitrate salts.

4. A synthesis method according to any one of claims 1 to 3, in which said 2D-ordered mesoporous template implemented at steps a) and d), is a 2D-ordered-mesoporous silica template.

## Patentansprüche

1. Syntheseverfahren für ein Material, das zur Familie der Spinell-Nickel-Cobaltite gehört, dargestellt durch die Formel Ni Co(2-x) FexO4, worin x größer oder gleich 0 und kleiner als 1 ist, und das eine 2D-geordnete mesoporöse physikalische Struktur aufweist, die keine mesoporösen Template darin umfasst, umfassend die folgenden Schritte:
- Einen Schritt a) des Mischens eines 2D-geordneten mesoporösen Templats, eines anorganischen Ni(II)-Salzes, eines anorganischen Co(II)-Salzes, optional eines anorganischen Fe(III)-Salzes und eines Alkohols, um eine erste alkoholische Suspension des 2D-geordneten mesoporösen Templats und der anorganischen Salze zu bilden und;
- Einen Schritt b), bei dem die erste alkoholische Suspension des 2D-geordneten mesoporösen Templats und der anorganischen Salze, die in Schritt a) erhalten wurde, zuerst homogenisiert und anschließend getrocknet wird, um ein Pulver einer Mischung aus dem 2D-geordneten mesoporösen Templat und den anorganischen Salzen zu bilden;
- Einen Schritt c) des Erhitzens des in Schritt b) erhaltenen Pulvers an der Luft, um ein Pulver einer Mischung aus dem 2D-geordneten mesoporösen Templat, dem Ni(II)-Oxid, dem Co(II)-Oxid und optional dem Fe(III)-Oxid zu bilden;
- Einen Schritt d) des Mischens eines 2D-geordneten mesoporösen Templats, eines anorganischen Ni(II)-Salzes, eines anorganischen Co(II)-Salzes, optional eines anorganischen Fe(III)-Salzes und eines Alkohols, um eine zweite alkoholische Suspension des 2D-geordneten mesoporösen Templats und der anorganischen Salze zu bilden;
- Einen Schritt e), bei dem die zweite alkoholische Suspension des 2D-geordneten mesoporösen Templats und der anorganischen Salze, die in Schritt d) erhalten wurde, mit dem Pulver einer Mischung aus dem 2D-geordneten mesoporösen Templat, dem Ni(II)-Oxid, dem Co(II)-Oxid und optional dem Fe(III)-Oxid, das in Schritt c) erhalten wurde, gemischt wird, um eine dritte Suspension zu bilden;
- Einen Schritt f) des ersten Homogenisierens und anschließenden Trocknens der dritten Suspension, die in Schritt e) erhalten wurde, um ein Pulver zu bilden;
- Einen Schritt g) des Erhitzens des in Schritt f) erhaltenen Pulvers an der Luft, um ein Material zu erhalten, das zur Familie der Spinell-Nickel-Cobaltite gehört, dargestellt durch die Formel Ni Co(2-x) FexO4, worin x größer oder gleich 0 und kleiner als 1 ist, und das eine 2D-geordnete mesoporöse physikalische Struktur aufweist;
- Einen Schritt h) des Mischens einer erhitzten wässrigen alkalischen Lösung und des in Schritt g) erhaltenen Materials, um eine wässrige alkalische Suspension des Materials zu bilden; und
- Einen Schritt i) des Filtrierens der in Schritt h) erhaltenen wässrigen alkalischen Suspension, um ein Retentat abzutrennen, das weiter mit Wasser gespült und getrocknet wird, um durch Entfernen des noch vorhandenen 2D-geordneten mesoporösen Templats das Material zu bilden, das zur Familie der Spinell-Nickel-Cobaltite gehört, dargestellt durch die Formel Ni Co(2-x) FexO4, worin x größer oder gleich 0 und kleiner als 1 ist, und das eine 2D-geordnete mesoporöse physikalische Struktur aufweist, die kein mesoporöses Templat umfasst.

2. Syntheseverfahren nach Anspruch 1, bei dem x in der Formel Ni Co(2-x) FexO4 gleich 0 ist.

3. Syntheseverfahren nach einem der Ansprüche 1 oder 2, bei dem das anorganische Ni(II)-Salz, das anorganische Co(II)-Salz und das optionale anorganische Fe(III)-Salz, die in den Schritten a) und d) eingesetzt werden, alle Nitratsalze sind.

4. Syntheseverfahren nach einem der Ansprüche 1 bis 3, bei dem das in den Schritten a) und d) eingesetzte 2D-geordnete mesoporöse Templat ein 2D-geordnetes mesoporöses Siliciumdioxid-Templat ist.

## Revendications

1. Procédé de synthèse d'un matériau appartenant à la famille de la cobaltite de nickel spinelle, représenté par la formule Ni Co(2-x) FexO4 dans laquelle x est supérieur ou égal à 0 et inférieur à 1 et ayant une structure physique mésoporeuse ordonnée en 2D qui ne comprend aucun gabarit mésoporeux, comprenant les étapes suivantes :
- Une étape a) de mélange d'un gabarit mésoporeux ordonné en 2D, d'un sel inorganique de Ni(II), d'un sel inorganique de Co(II), facultativement d'un sel inorganique de Fe(III) et d'un alcool, pour former une première suspension alcoolique dudit gabarit mésoporeux ordonné en 2D et desdits sels inorganiques et ;
- Une étape b) durant laquelle ladite première suspension alcoolique dudit gabarit mésoporeux ordonné en 2D et desdits sels inorganiques, obtenue à l'étape a), est d'abord homogénéisée et ensuite séchée, pour former une poudre d'un mélange dudit gabarit mésoporeux ordonné en 2D et desdits sels inorganiques ;
- Une étape c) de chauffage sous air, de la poudre obtenue à l'étape b) pour former une poudre d'un mélange dudit gabarit mésoporeux ordonné en 2D, de l'oxyde de Ni(II), de l'oxyde de Co(II) et facultativement de l'oxyde de Fe(III) ;
- Une étape d) de mélange d'un gabarit mésoporeux ordonné en 2D, d'un sel inorganique de Ni(II), d'un sel inorganique de Co(II), facultativement d'un sel inorganique de Fe(III) et d'un alcool, pour former une seconde suspension alcoolique dudit gabarit mésoporeux ordonné en 2D et desdits sels inorganiques ;
- Une étape e) durant laquelle ladite seconde suspension alcoolique dudit gabarit mésoporeux ordonné en 2D et desdits sels inorganiques, obtenue à l'étape d), est mélangée avec ladite poudre d'un mélange dudit gabarit mésoporeux ordonné en 2D, de l'oxyde de Ni(II), de l'oxyde de Co(II) et facultativement de l'oxyde de Fe(III), obtenue à l'étape c), pour former une troisième suspension ;
- Une étape f) de première homogénéisation, et de séchage subséquent, de la troisième suspension, obtenue à l'étape e), pour former une poudre ;
- Une étape g) de chauffage sous air, de la poudre obtenue à l'étape f) pour obtenir un matériau appartenant à la famille de la cobaltite de nickel spinelle représenté par la formule Ni Co(2-x) FexO4 dans laquelle x est supérieur ou égal à 0 et inférieur à 1 et ayant une structure physique mésoporeuse ordonnée en 2D ;
- Une étape h) de mélange d'une solution aqueuse alcaline chauffée et du matériau obtenu à l'étape g), pour former une suspension aqueuse alcaline dudit matériau ; et
- Une étape i) de filtration de la suspension aqueuse alcaline obtenue à l'étape h), pour séparer un rétentat, qui est en outre rincé à l'eau et séché pour former, par élimination du gabarit mésoporeux ordonné en 2D encore présent, ledit matériau appartenant à la famille de la cobaltite de nickel spinelle représenté par la formule Ni Co(2-x) FexO4 dans laquelle x est supérieur ou égal à 0 et inférieur à 1 et ayant une structure physique mésoporeuse ordonnée en 2D, qui ne comprend aucun gabarit mésoporeux.

2. Procédé de synthèse selon la revendication 1, dans lequel x est égal à 0 dans la formule Ni Co(2-x) FexO4.

3. Procédé de synthèse selon l'une quelconque des revendications 1 ou 2, dans lequel ledit sel inorganique de Ni(II), ledit sel inorganique de Co(II) et ledit sel inorganique facultatif de Fe(III) mis en œuvre aux étapes a) et d) sont tous des sels de nitrate.

4. Procédé de synthèse selon l'une quelconque des revendications 1 à 3, dans lequel ledit gabarit mésoporeux ordonné en 2D mis en œuvre aux étapes a) et d) est un gabarit de silice mésoporeuse ordonnée en 2D.
